# EUROPÄISCHE PATENTSCHRIFT

(11) **EP 3 162 666 B1**
(45) Veröffentlichungstag und Bekanntmachung des Hinweises auf die Patenterteilung: **19.09.2018**
(21) Anmeldenummer: 16191318.1
(22) Anmeldetag: 29.09.2016
(51) Int. Cl.: B62D 15/02, G05D 1/02, G08G 1/14

(54) **VERFAHREN ZUM AUTONOMEN WIEDERFINDEN EINER STARTPOSITION, FAHRERASSISTENZSYSTEM UND KRAFTFAHRZEUG**
METHOD FOR AUTONOMOUS RECOVERY OF A STARTING POSITION, DRIVER ASSISTANCE SYSTEM AND MOTOR VEHICLE
PROCÉDÉ POUR RETROUVER DE FAÇON AUTONOME UNE POSITION DE DÉPART, SYSTÈME D'ASSISTANCE DU CONDUCTEUR ET VÉHICULE AUTOMOBILE

(30) Priorität: 29.10.2015 DE 102015118541
(43) Veröffentlichungstag der Anmeldung: 03.05.2017
(73) Patentinhaber: Valeo Schalter und Sensoren GmbH, 74321 Bietigheim-Bissingen (DE)
(72) Erfinder: Jaya, Akhil Dheerendra, 74321 Bietigheim-Bissingen (DE)

(56) Entgegenhaltungen:
- EP-A1- 2 910 453
- DE-A1-102010 030 208
- US-A- 5 957 232
- US-A1- 2012 188 100

## Beschreibung

Die Erfindung betrifft ein Verfahren zum autonomen Wiederfinden einer Startposition eines Kraftfahrzeugs auf einer Parkfläche durch das Kraftfahrzeug. Die Erfindung betrifft auch ein Fahrerassistenzsystem für ein Kraftfahrzeug, wie auch ein Kraftfahrzeug mit einem Fahrerassistenzsystem.

Aus der WO 2015/062769 A1 ist ein Parkraumverwaltungssystem bekannt. Bei dem Parkraumverwaltungssystem für eine Valet-Parking-Funktion wird der Zeitpunkt des Einleitens des automatischen Ausparkvorgangs optimiert. Dazu wird abgeschätzt oder explizit vorgegeben, wann der Fahrer eines geparkten Fahrzeugs an einer vordefinierten Abholposition sein wird, sodass das Parkraumverwaltungssystem dem abzuholenden Fahrzeug übermitteln kann, wann dieses den Ausparkvorgang zu starten hat, um rechtzeitig an der Abholposition zu sein.

Das Dokument DE102010030208 A1 ist als nächstliegender Stand der Technik nach dem Oberbegriff des Anspruchs 1 zu sehen. Valet-Parking-Systeme sind Fahrerassistenzsysteme für Parkplatzanlagen, die es zumeist über die Kommunikation mit einem Parkraumverwaltungssystem, das beispielsweise als Server ausgebildet ist, ermöglichen, ein Fahrzeug ohne die Einwirkung eines Fahrers von einem Einfahrbereich einer Parkplatzanlage zu einem freien Parkplatz zu fahren, um das Fahrzeug dort für eine bestimmte Zeit abzustellen. Das Parkraumverwaltungssystem übernimmt dabei die Verwaltung der zur Verfügung stehenden Parkplätze, es weist die Parkplätze den jeweiligen Fahrzeugen zu und verwaltet Parkdauer und gegebenenfalls Abrechnung der Parkkosten. Auf Anfrage des Fahrers wird das Fahrzeug in einen Abholbereich zurückgebracht. Der Fahrer wird dadurch von der Parkplatzsuche und dem Ein- und Ausparkvorgang entlastet.

Es ist Aufgabe der Erfindung, ein Verfahren, ein Fahrerassistenzsystem sowie ein Kraftfahrzeug bereitzustellen, mit welchem beziehungsweise bei welchem ein autonomes Wiederfinden einer Startposition eines Kraftfahrzeugs auf einer Parkfläche durch das Kraftfahrzeug einfacher und aufwandsärmer erfolgen kann.

Diese Aufgabe wird erfindungsgemäß durch ein Verfahren, durch ein Fahrerassistenzsystem sowie durch ein Kraftfahrzeug mit den Merkmalen gemäß den jeweiligen unabhängigen Ansprüchen gelöst.

Bei einem erfindungsgemäßen Verfahren wird eine Startposition eines Kraftfahrzeugs auf einer Parkfläche durch das Kraftfahrzeug autonom wiedergefunden. Es werden folgende Schritte durchgeführt:
a) Aktivieren eines Parkmodus des Kraftfahrzeugs an der Startposition zum Auffinden eines freien Parkplatzes;
b) insbesondere zumindest semi-autonomes, Fahren des Kraftfahrzeugs von der Startposition zu dem freien Parkplatz der Parkfläche;
c) Einparken des Kraftfahrzeugs in den Parkplatz;
d) Ausparken aus dem Parkplatz und Fahren des Kraftfahrzeugs entlang eines vorgegebenen Fahrstreckenmusters auf der Parkfläche;
e) Bestimmen einer entsprechenden Anzahl von während der Schritte b) bis d) vorgenommenen Winkeländerungen des Kraftfahrzeugs bezüglich vorbestimmter und die Startposition charakterisierender Hauptwinkel;
f) Vergleichen der jeweils aktuell vorgenommenen Anzahl der Winkeländerungen mit einer Anzahl von Referenzwinkeländerungen bezüglich der Hauptwinkel in zumindest einer abgespeicherten Winkeländerungstabelle; und
g) Fahren entlang der vorgegebenen Fahrstrecke bis zum Übereinstimmen der Anzahl der Winkeländerungen mit der Anzahl der Referenzwinkeländerungen in der Winkeländerungstabelle und Erkennen der Startposition bei Erreichen der Übereinstimmung der Anzahlen.

Durch das erfindungsgemäße Verfahren wird die Startposition des Kraftfahrzeugs einfacher und aufwandsärmer wiedergefunden.

Vorzugsweise ist das erfindungsgemäße Verfahren Bestandteil einer Valet-Parking-Funktion, bei der der Fahrer an die Parkfläche, beispielsweise eine Ebene eines Parkhauses, heranfährt und beispielsweise an einer Einfahrt der Parkfläche den Parkmodus aktiviert. Nun bekommt das Kraftfahrzeug beispielsweise Infrastrukturinformation von der Parkfläche bereitgestellt. Damit verfügt das Kraftfahrzeug über die Information eines, beispielsweise nächstgelegenen, freien Parkplatzes. An der Startposition, an welcher der Parkmodus des Kraftfahrzeugs aktiviert wird, wird das Kraftfahrzeug vorzugsweise zunächst bezüglich seiner Längsachse parallel zu einer Längsachse einer Fahrgasse der Parkfläche ausgerichtet. Von nun an werden die vorgenommenen Winkeländerungen bezüglich der Hauptwinkel aktuell während der Fahrt zu dem freien Parkplatz, dem Einparken, dem Ausparken und der Fahrt nach dem Ausparken bestimmt. Die jeweils vorgenommene Anzahl der Winkeländerungen wird aktuell mit einer Anzahl von Referenzwinkeln aus einer abgespeicherten Winkeländerungstabelle verglichen. Bei Übereinstimmen der Anzahl der Winkeländerungen mit der Anzahl der Referenzwinkeländerungen wird davon ausgegangen, dass die Startposition wieder erreicht ist. Nach dem erneuten Erreichen der Startposition kann das Kraftfahrzeug beispielsweise noch eine vorbestimmte Toleranzstrecke, beispielsweise 2 Meter, bewegt werden.

Durch die Winkeländerungstabelle werden die Referenzwinkeländerungen bereitgestellt, welche für das Fahren auf der Parkfläche entlang des vorgegebenen Fahrstreckenmusters benötigt werden. So kann durch die vorgegebenen Referenzwinkeländerungen festgestellt werden, nach welcher Anzahl der Winkeländerungen die Startposition erreicht ist.

Vorteilhaft ist, dass für das Wiederfinden der Startposition keine aufwendigen und teuren Sensoren, wie beispielsweise Kameras, Radarsensoren, Laserscanner und/oder Ultraschallsensoren nötig sind. Zudem ist für das Verfahren zum Wiederauffinden der Startposition auch ein Vorliegen von aktuellen Infrastrukturdaten nicht nötig. So muss das Kraftfahrzeug insbesondere nicht nach Beenden des Parkvorgangs ein weiteres Mal Infrastrukturinformation über die Parkfläche bereitgestellt bekommen. Das Kraftfahrzeug kann nun lediglich die Parkfläche entlang des vorgegebenen Fahrstreckenmusters abfahren, bis die jeweils aktuell vorgenommene Anzahl der Winkeländerungen mit der Anzahl von Referenzwinkeländerungen übereinstimmt.

Vorzugsweise ist es vorgesehen, dass der jeweilige Hauptwinkel als ein Winkel von 0° und/oder 90° und/oder 180° und/oder 270° relativ, i nsbesondere gegen den Uhrzeigersinn, zur Ausrichtung einer Längsachse einer Fahrgasse der Parkfläche definiert wird. So kann die Winkeländerungstabelle lediglich mit den vier Hauptwinkeln erzeugt werden. Die Hauptwinkel beziehen sich insbesondere auf die Ausrichtung der Längsachse der Fahrgasse, in welcher die Startposition liegt, zu einer Längsachse des Kraftfahrzeugs an der aktuellen Position. So wird insbesondere die Anzahl der Winkeländerungen jedes Mal aktualisiert, wenn die Längsachse des Kraftfahrzeugs während der Bewegung des Kraftfahrzeugs erneut in einem der jeweiligen Hauptwinkel zu der Längsachse derjenigen Fahrgasse, welche die Startposition aufweist, ausgerichtet ist. Die Startposition wird dadurch einfacher und aufwandsärmer wiedergefunden.

Vorzugsweise ist es vorgesehen, dass das Kraftfahrzeug mit seiner Längsachse nach Aktivieren des Parkmodus an der Startposition, insbesondere zumindest semi-autonom, parallel bezüglich einer Längsachse einer Fahrgasse der Parkfläche ausgerichtet wird. So kann es beispielsweise vorkommen, dass der Parkmodus des Kraftfahrzeugs aktiviert wird, falls das Kraftfahrzeug bezüglich seiner Längsachse nicht parallel zu einer Längsachse einer Fahrgasse der Parkfläche ausgerichtet ist. Ist dies der Fall, so wird das Kraftfahrzeug mit seiner Längsachse parallel zur Längsachse der Fahrgasse ausgerichtet. Das Ausrichten kann beispielsweise zumindest semi-autonom oder autonom erfolgen. Insbesondere führt dies auch zu einer Verschiebung der Startposition. So wird die Startposition aufgrund des Ausrichtens von dem Ort des Aktivierens des Parkmodus zu dem Ort auf der Parkfläche verschoben, an welchem die Längsachse des Kraftfahrzeugs und die Längsachse der Fahrgasse parallel zueinander ausgerichtet sind. Abdort beginnt dann insbesondere das Bestimmen der Winkeländerungen. Die Stellung des Kraftfahrzeugs an der Startposition wird vorzugsweise bereits als die erste Winkeländerung gezählt. Durch das Ausrichten des Kraftfahrzeugs abhängig von der Längsachse der Fahrgasse wird die Startposition des Kraftfahrzeugs einfacher und aufwandsärmer wiedergefunden.

Weiterhin kann es vorgesehen sein, dass das Kraftfahrzeug mit seiner Längsachse parallel zu einer Längsachse einer nach der Startposition zuerst angefahrenen Fahrgasse der Parkfläche ausgerichtet wird. So kann die zuerst angefahrene Fahrgasse beispielsweise eine Fahrgasse der Parkfläche direkt nach der Einfahrt der Parkfläche sein oder aber eine Fahrgasse, welche die zuerst befahrene Fahrgasse nach einem Ebenenwechsel ist. Durch das Ausrichten des Kraftfahrzeugs abhängig von der zuerst angefahrenen Fahrgasse wird das Wiederfinden des Kraftfahrzeugs einfacher und genauer durchgeführt.

Insbesondere ist es vorgesehen, dass die Winkeländerungstabelle abhängig von einer Position des freien Parkplatzes auf der Parkfläche aus einer Mehrzahl von abgespeicherten Winkeländerungstabellen ausgewählt wird. Die Winkeländerungstabellen können dabei beispielsweise in dem Kraftfahrzeug abgespeichert sein oder aber über Infrastrukturinformation von der Parkfläche dem Kraftfahrzeug bereitgestellt werden. Die Winkeländerungstabelle korrespondiert insbesondere mit dem vorgegebenen Fahrstreckenmuster auf der Parkfläche. So werden durch die abgespeicherten Winkeländerungstabellen vielfältige Anzahlen von Referenzwinkeländerungen für eine Vielzahl von vorgegebenen Fahrstreckenmustern und/oder vorgegebenen Einpark- und Ausparkvarianten des Kraftfahrzeugs bereitgestellt. Abhängig von der Position des freien Parkplatzes wird die Winkeländerungstabelle dann aus der Mehrzahl der abgespeicherten Winkeländerungstabellen ausgewählt. Das Wiederfinden der Startposition des Kraftfahrzeugs dadurch einfacher und aufwandsärmer durchgeführt.

Weiterhin kann es vorgesehen sein, dass die Winkeländerungstabelle abhängig von einer relativen Position des Parkplatzes zu dem Kraftfahrzeug, insbesondere rechts oder links bezüglich einer Längsachse des Kraftfahrzeugs und in Vorwärtsfahrtrichtung des Kraftfahrzeugs betrachtet, ausgewählt wird. Die relative Position des Parkplatzes wird insbesondere dann bestimmt, wenn sich das Kraftfahrzeug bereits in der an den Parkplatz angrenzenden Fahrgasse der Parkfläche befindet. So bezieht sich das Rechts oder das Links bezüglich der Längsachse des Kraftfahrzeugs darauf, wie das Kraftfahrzeug, wenn es sich bereits in der an den Parkplatz angrenzenden Fahrgasse befindet, zu dem Parkplatz ausgerichtet ist. Das Auswählen der Winkeländerungstabelle bezieht sich insbesondere auf den Fall, dass lediglich rückwärts oder vorwärts eingeparkt und entgegengesetzt wieder ausgeparkt werden kann. Ist das Kraftfahrzeug also beispielsweise rückwärts auf den Parkplatz eingefahren, so fährt dieses beim Ausparken vorwärts wieder von dem Parkplatz heraus. Durch die Auswahl der Winkeländerungstabelle abhängig von der relativen Position des Parkplatzes zu dem Kraftfahrzeug wird das Wiederauffinden der Startposition einfacher und aufwandsärmer durchgeführt.

Weiterhin ist es vorzugsweise vorgesehen, dass die Winkeländerungstabelle abhängig von einer Einparkrichtung des Kraftfahrzeugs in den Parkplatz, insbesondere vorwärts oder rückwärts, aus einer Mehrzahl von abgespeicherten Winkeländerungstabellen ausgewählt wird. So ist es insbesondere vorgesehen, dass das Kraftfahrzeug lediglich vorwärts oder rückwärts einparken kann. Zum Ausparken wird das Kraftfahrzeug dann entgegengesetzt der Einparkrichtung betrieben. Fährt das Kraftfahrzeug also vorwärts auf den Parkplatz, so fährt es rückwärts von dem Parkplatz ab. Die Einparkrichtung ist dann insbesondere auch ausschlaggebend für das Vorgeben des Fahrstreckenmusters des Kraftfahrzeugs auf der Parkfläche. Durch das Auswählen der Winkeländerungstabelle abhängig von der Einparkrichtung des Kraftfahrzeugs wird das Wiederfinden der Startposition des Kraftfahrzeugs einfacher und aufwandsärmer durchgeführt.

In einer Ausführungsform kann es vorgesehen sein, dass die Winkeländerungstabelle für eine Einparkrichtung rückwärts in den freien Parkplatz und dem rechts von dem Kraftfahrzeug positionierten freien Parkplatz durch dreimal den Hauptwinkel 0°, zweimal den Hauptwinkel 90°, einmal den Hauptwinkel 270° un d einmal den Hauptwinkel 180° definiert wird. Durch das Definieren der Winkeländerungstabelle für die Einparkrichtung rückwärts und den rechts von dem Kraftfahrzeug positionierten freien Parkplatz kann die Startposition des Kraftfahrzeugs einfacher und aufwandsärmer wiedergefunden werden. So wird durch das vorgegebene Fahrstreckenmuster auf der Parkfläche und die bekannte Einparkrichtung sowie die bekannte Position des Parkplatzes eine ausreichende Kenntnis erlangt, um die Winkeländerungstabelle dementsprechend zu bestimmen und die Startposition dann dadurch mit der aktuell vorgenommenen Anzahl der Winkeländerungen im Vergleich wiederzufinden.

In einer weiteren Ausführungsform kann es vorgesehen sein, dass die Winkeländerungstabelle für eine Einparkrichtung rückwärts in den freien Parkplatz und dem links von dem Kraftfahrzeug positionierten freien Parkplatz durch zweimal den Hauptwinkel 0°, zweimal den Hauptwinkel 90°, zweima I den Hauptwinkel 180°und einmal den Hauptwinkel 270° definiert wird. Dadurch kann die Winkeländerungstabelle für die Einparkrichtung rückwärts und den links von dem Kraftfahrzeug positionierten freien Parkplatz einfach und aufwandsarm bereitgestellt werden. Dadurch wiederum wird die Startposition des Kraftfahrzeugs einfacher und aufwandsärmer wiedergefunden.

Vorzugsweise ist es vorgesehen, dass dem Kraftfahrzeug zumindest ab der Startposition eine aktuelle Infrastrukturinformation über die Parkfläche bereitgestellt wird. Die Infrastrukturinformation wird dem Kraftfahrzeug beispielsweise drahtlos übermittelt. So kann die Infrastrukturinformation dem Kraftfahrzeug beispielsweise automatisch bei Ankommen des Kraftfahrzeugs an einer Einfahrt der Parkfläche übermittelt werden. Die aktuelle Infrastrukturinformation kann dem Kraftfahrzeug aber auch erst bei Aktivieren des Parkmodus bereitgestellt werden. Durch die aktuelle Infrastrukturinformation ist das Kraftfahrzeug insbesondere in der Lage, zumindest semi-autonom von der Startposition zu dem freien Parkplatz der Parkfläche zu fahren. Insbesondere wird die aktuelle Infrastrukturinformation lediglich einmal, nämlich bei Aktivieren des Parkmodus, von der Parkfläche bezogen. Durch die Infrastrukturinformation kann beispielsweise auch eine Längsachse einer Fahrgasse bestimmt werden, und es kann beispielsweise ein vorgegebenes Fahrstreckenmuster auf der Parkfläche bestimmt werden.

Weiterhin insbesondere ist es vorgesehen, dass durch die aktuelle Infrastrukturinformation ein Lageplan und/oder eine jeweilige Position von aktuell freien Parkplätzen der Parkfläche dem Kraftfahrzeug bereitgestellt wird. So umfasst die aktuelle Infrastrukturinformation also insbesondere den Lageplan und/oder die jeweilige Position der aktuell freien Parkplätze. Anhand des Lageplans kann dann beispielsweise die Anzahl von Fahrgassen der Parkfläche und/oder eine Ausrichtung von Fahrgassen der Parkfläche bestimmt werden. Durch das Bereitstellen der jeweiligen Position von aktuell freien Parkplätzen kann das Kraftfahrzeug beispielsweise den nächsten freien Parkplatz auswählen und zu diesem, insbesondere anhand des Lageplans und eines Umfeldsensors des Kraftfahrzeugs, beispielsweise eines Laserscanners, von der Startposition zu dem freien Parkplatz der Parkfläche fahren. Die bereitgestellte Infrastrukturinformation ist insbesondere zu dem Zeitpunkt des Bereitstellens aktuell.

Insbesondere ist es vorgesehen, dass benachbarte Fahrgassen der Parkfläche, die zwischen Parkplatzreihen der Parkfläche verlaufen, ab dem Bewegen des Kraftfahrzeugs von der Startposition ausgehend jeweils in abwechselnder Fahrtrichtung mit dem Kraftfahrzeug durchfahren werden. Durch das Abwechseln der Fahrtrichtung beim Durchfahren der benachbarten Fahrgassen kann das vorgegebene Fahrstreckenmuster einfach bestimmt werden. So schlängelt sich das Kraftfahrzeug insbesondere mäanderartig durch die Fahrgassen der Parkfläche. Insbesondere wird durch mäanderartiges Durchfahren der Fahrgassen der Parkfläche zwar nicht jedes Mal der kürzeste Weg von dem Parkplatz zu der Startposition gewählt, jedoch kann das vorgegebene Fahrstreckenmuster einfacher und allgemeingültiger für eindeutige Winkeländerungstabellen vorgegeben werden. So ist durch das mäanderartige Abfahren der Fahrgassen der Parkfläche beabsichtigt, dass das Kraftfahrzeug am Ende einer Parkplatzreihe beispielsweise zuerst rechts abbiegt, um dann am Ende der nächsten Parkplatzreihe links abzubiegen und darauf folgend nach dem weiteren Durchfahren einer Parkplatzreihe wieder rechts abzubiegen. Insbesondere ist es vorgesehen, dass alle vorhandenen Fahrgassen zwischen dem Parkplatz und der Startposition beim Zurückfahren von dem Parkplatz zu der Startposition durchfahren werden. Dadurch kann das Fahrstreckenmuster einfacher und effektiver vorgegeben werden.

Die Erfindung betrifft auch ein Fahrerassistenzsystem für ein Kraftfahrzeug, welches dazu ausgebildet ist, ein erfindungsgemäßes Verfahren durchzuführen.

Es kann vorgesehen sein, dass das Kraftfahrzeug einen Laserscanner und/oder eine Winkelbestimmungseinheit umfasst. Das Kraftfahrzeug kann auch mehrere Laserscanner und/oder Winkelbestimmungseinheiten umfassen. Das Kraftfahrzeug kann weiterhin auch vielfältige Umfeldsensoren umfassen. Die Winkelbestimmungseinheit ist insbesondere dazu ausgelegt, zumindest Winkeländerungen des Kraftfahrzeugs in 90°-Schritten zu erkennen.

Die Erfindung betrifft auch ein Kraftfahrzeug mit einem erfindungsgemäßen Fahrerassistenzsystem.

Die mit Bezug auf das erfindungsgemäße Verfahren vorgestellten bevorzugten Ausführungsformen und deren Vorteile gelten entsprechend für das erfindungsgemäße Fahrerassistenzsystem sowie für das erfindungsgemäße Kraftfahrzeug.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen.

Die Ausführungsbeispiele der Erfindung werden nachfolgend anhand schematischer Zeichnungen näher erläutert.

Dabei zeigen:
- Fig. 1: eine schematische Draufsicht auf eine Parkfläche, auf welcher ein Kraftfahrzeug in einen rechts von dem Kraftfahrzeug positionierten freien Parkplatz der Parkfläche rückwärts einparkt und nach dem Ausparken aus dem Parkplatz das Kraftfahrzeug entlang eines vorgegebenen Fahrstreckenmusters gefahren wird, bis eine Startposition des Kraftfahrzeugs auf der Parkfläche erneut erkannt wird;
- Fig. 2: eine schematische Draufsicht auf die Parkfläche analog zu Fig. 1, wobei das Kraftfahrzeug rückwärts in einen links von dem Kraftfahrzeug positionierten Parkplatz einparkt; und
- Fig. 3: eine schematische Draufsicht auf die Parkfläche analog zu Fig. 1, wobei das Kraftfahrzeug vorwärts in den rechts von dem Kraftfahrzeug positionierten Parkplatz einparkt.

In den Figuren werden gleiche oder funktionsgleiche Elemente mit den gleichen Bezugszeichen versehen.

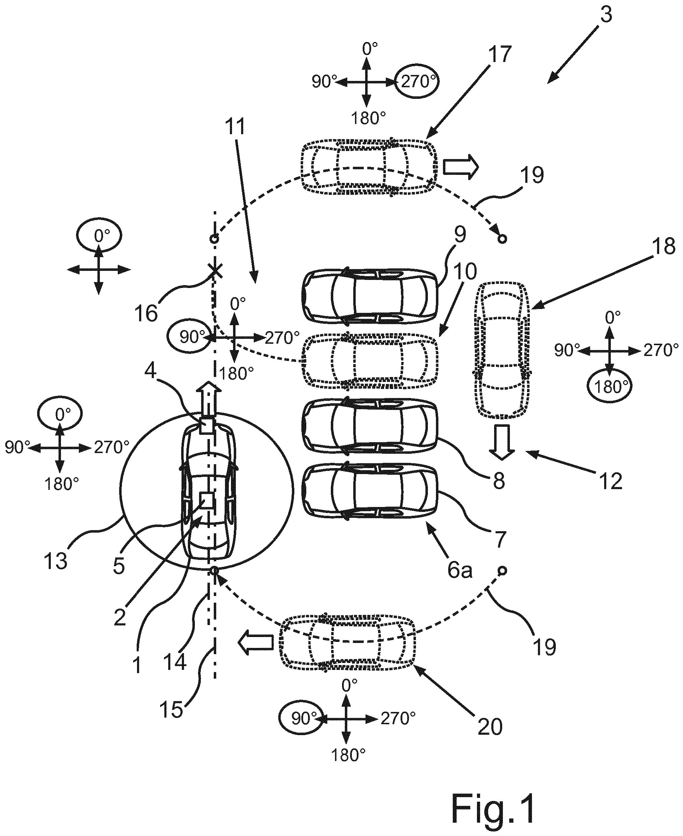

In Fig. 1 ist schematisch ein Kraftfahrzeug 1 mit einem Fahrerassistenzsystem 2 auf einer Parkfläche 3 dargestellt. Das Fahrerassistenzsystem 2 umfasst gemäß dem Ausführungsbeispiel einen Laserscanner 4 und eine Winkelbestimmungseinheit 5. Der Laserscanner 4 ist dazu ausgebildet, ein zumindest semi-autonomes Fahren des Kraftfahrzeugs 1 zu unterstützen. Die Winkelbestimmungseinheit 5 ist dazu ausgebildet, Winkeländerungen des Kraftfahrzeugs 1 in zumindest 90°-Schritten zu erkennen. Weiterhin kann die Winkelbestimmungseinheit 5 beispielsweise einen Lenkwinkelsensor umfassen. Der Winkelbestimmungssensor 5 stellt Odometrieinformation über das Kraftfahrzeug 1 bereit.

Die Parkfläche 3 weist eine erste Parkplatzreihe 6a auf. In der ersten Parkplatzreihe 6a stehen ein erstes parkendes Fahrzeug 7, ein zweites parkendes Fahrzeug 8 und ein drittes parkendes Fahrzeug 9. Zwischen dem zweiten parkenden Fahrzeug 8 und dem dritten parkenden Fahrzeug 9 befindet sich ein freier Parkplatz 10 der Parkfläche 3. Die erste Parkplatzreihe 6a trennt eine erste Fahrgasse 11 der Parkfläche 3 von einer parallel dazu verlaufenden zweiten Fahrgasse 12 der Parkfläche 3. Die Fahrgassen 11, 12 erstrecken sich also voneinander beabstandet und auf gegenüberliegenden Seiten der ersten Parkplatzreihe 6a.

Das Verfahren gemäß dem Ausführungsbeispiel von Fig. 1 läuft nun wie folgt ab. Das Kraftfahrzeug 1 befindet sich an einer Startposition 13 auf der Parkfläche 3 innerhalb der ersten Fahrgasse 11. Dort wird ein Parkmodus des Kraftfahrzeugs 1 zum Auffinden des freien Parkplatzes 10 aktiviert. Das Kraftfahrzeug 1 bekommt nun beispielsweise Infrastrukturinformationen, beispielsweise einen Lageplan und/oder eine Position des freien Parkplatzes 10, insbesondere drahtlos von einem Server der Parkfläche 3 bereitgestellt. Durch den Lageplan kann beispielsweise auch eine Beschreibung der ersten Parkplatzreihe 6a und/oder der ersten Fahrgasse 11 und/oder der zweiten Fahrgasse 12 umfasst sein. An der Startposition 13 kann ein Fahrer des Kraftfahrzeugs 1 das Kraftfahrzeug 1 nun beispielsweise verlassen und den Parkmodus von dem Kraftfahrzeug 1 selbsttätig durchführen lassen.

Es wird überprüft, ob das Kraftfahrzeug 1 mit seiner Längsachse 14 parallel zu einer Längsachse 15 der ersten Fahrgasse 11 ausgerichtet ist. Ist dies nicht der Fall, wird das Kraftfahrzeug 1 dementsprechend ausgerichtet. Das Ausrichten erfolgt insbesondere autonom. Die Startposition 13 wird vorzugsweise an das Ausrichten des Kraftfahrzeugs 1 bezüglich der ersten Fahrgasse 11 angepasst.

Das Kraftfahrzeug 1 fährt von der Startposition 13 zu einer ersten Position 16 in der ersten Fahrgasse 11. Wenn das Kraftfahrzeug 1 sich an der ersten Position 16 befindet, ist der freie Parkplatz 10 in Fahrtrichtung des Kraftfahrzeugs 1 rechts von der Längsachse 11 positioniert. Das Kraftfahrzeug 1 parkt nun rückwärts in den freien Parkplatz 10 ein. Das Einparken in den freien Parkplatz 10 kann beispielsweise anhand von einem Zug, zwei Zügen, drei Zügen oder auch mehr Zügen erfolgen. Bekommt das Kraftfahrzeug 1 nun ein Steuersignal zum Ausparken aus dem Parkplatz 10, beispielsweise, weil der Fahrer des Kraftfahrzeugs 1 an der Startposition 13 wartet und das Kraftfahrzeug 1 in Empfang nehmen möchte, so parkt das Kraftfahrzeug 1 vorwärts aus dem Parkplatz 10 aus und befindet sich dann wieder an der ersten Position 16.

Sowohl an der Startposition 13 als auch beim Parken des Kraftfahrzeugs 1 in dem Parkplatz 10 und nach dem Wiederausparken des Kraftfahrzeugs 1 von dem Parkplatz 10, also der erneuten Anwesenheit an der ersten Position 16, wird eine Winkeländerung des Kraftfahrzeugs 1 bezüglich vorbestimmter Hauptwinkel bestimmt. Genauer gesagt wird die Anzahl der vorgenommenen Winkeländerungen bestimmt. An der Startposition 13 wird die Anzahl für den Hauptwinkel 0°um 1 erhöht. Beim Parken in dem Parkplatz 10 wird die Anzahl der Winkeländerungen von dem Hauptwinkel 90°um 1 erhöht. Und nach dem Ausparken, wenn sich das Kraftfahrzeug 1 an der ersten Position 16 wieder befindet, wird ebenfalls wieder die Anzahl der Winkeländerungen mit dem Hauptwinkel 0°um 1 erhöht. Zu diesem Zeitpunkt liegen nun zwei Winkeländerungen mit 0°vor und eine Winkeländerung mit 90°.

Von der ersten Position 16 aus fährt das Kraftfahrzeug 1 eine Rechtskurve und kommt zwischen der ersten Fahrgasse 11 und der zweiten Fahrgasse 12 an einer zweiten Position 17 vorbei. An der zweiten Position 17 ist das Kraftfahrzeug 1 nach dem Hauptwinkel 270° ausgerichtet. Dadurch wird die Anzahl der Winkeländerungen von dem Hauptwinkel 270°ab der zweiten Position 17 um 1 er höht. Nach Vollenden der Rechtskurve befindet sich das Kraftfahrzeug 1 in der zweiten Fahrgasse 12 an einer dritten Position 18. An der dritten Position 18 ist das Kraftfahrzeug 1 nach dem Hauptwinkel 180° ausgerichtet. Dadurch wird die Anzahl der Winkeländerungen von dem Hauptwinkel 180° um 1 erhöht. Nach der dritten Position 18 macht das Kraftfahrzeug 1 aufgrund eines vorgegebenen Fahrstreckenmusters 19 eine weitere Rechtskurve und kommt zwischen der zweiten Fahrgasse 12 und der ersten Fahrgasse 11 an einer vierten Position 20 vorüber. An der vierten Position 20 ist das Kraftfahrzeug 1 nach dem Hauptwinkel 90°ausgerichtet. Die Anzahl der Winkel änderungen bezüglich des Hauptwinkels 90°wird also ab der vierten Position 20 um 1 erhöht. Nach der vierten Position 20 wird die Rechtskurve vollendet, bis das Kraftfahrzeug 1 in der ersten Fahrgasse 11 gemäß dem Hauptwinkel 0°ausgerichtet ist. Die Anzahl der Winkeländerungen bezüglich des Hauptwinkels 0°wird dadurch wiederum um 1 erhöht. Aufgrund des Vergleichs der Anzahl der Winkeländerungen mit einer Anzahl von Referenzwinkeländerungen bezüglich der Hauptwinkel in zumindest einer abgespeicherten Winkeländerungstabelle kann nun erkannt werden, dass das Kraftfahrzeug 1 wieder an der Startposition 13 angekommen ist.

Die abgespeicherte Winkeländerungstabelle sieht dabei für das Ausführungsbeispiel gemäß Fig. 1 wie in Tabelle 1 gezeigt aus.

**Tabelle 1:**

| Hauptwinkel | Anzahl von Referenzwinkeländerungen |
|---|---|
| 0° | 3 |
| 90° | 2 |
| 270° | 1 |
| 180° | 1 |

So werden die jeweils vorgenommenen Anzahlen der Winkeländerungen nach jeder neuen Winkeländerung, also beispielsweise an der ersten Position 16, der zweiten Position 17, der dritten Position 18, der vierten Position 20 und dem Wiedererreichen der Startposition 13 mit den Anzahlen von Referenzwinkeländerungen in der Winkeländerungstabelle verglichen. Stimmen die Anzahlen der Winkeländerungen mit den Anzahlen der Referenzwinkeländerungen überein, so wird die Startposition 13 erkannt und dadurch wiedergefunden. Nach Erreichen der Startposition 13 kann das Kraftfahrzeug 1 beispielsweise noch eine Übergangsstrecke beziehungsweise eine Toleranzstrecke fahren, welche beispielsweise 2 Meter betragen kann. An der Startposition 13 kann der Fahrer dann das Kraftfahrzeug 1 wieder in Empfang nehmen und damit weiterfahren.

Das vorgegebene Fahrstreckenmuster 19 wird beispielsweise anhand des durch die Infrastrukturinformation übermittelten Lageplans bereitgestellt.

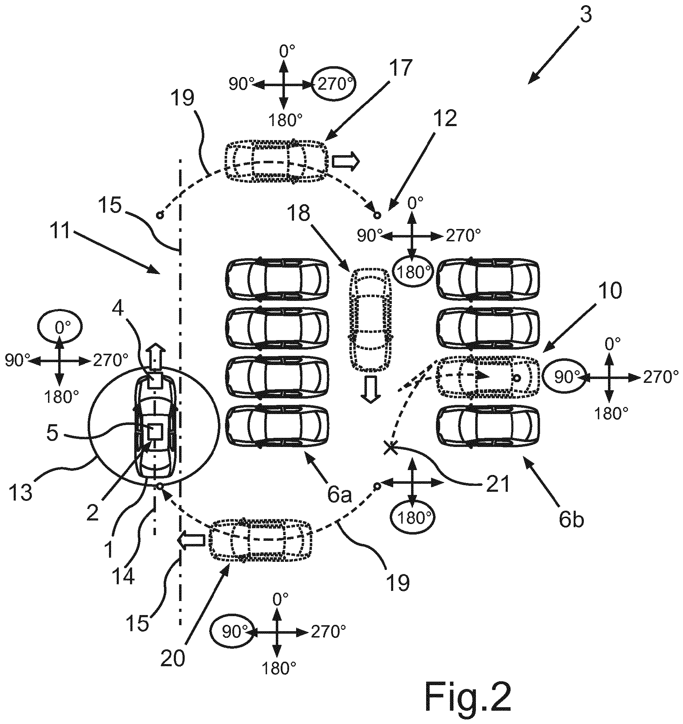

Fig. 2 zeigt das Wiederfinden der Startposition 13 bei einem rückwärts gerichteten Einparkvorgang und einem links, aus Richtung der Vorwärtsfahrtrichtung des Kraftfahrzeugs 1 betrachteten, von dem Kraftfahrzeug 1 angeordneten freien Parkplatz 10. Das Ausführungsbeispiel gemäß Fig. 2 weist eine zweite Parkplatzreihe 6b der Parkfläche 3 auf. Der freie Parkplatz 10 befindet sich in der zweiten Parkplatzreihe 6b. Das Kraftfahrzeug 1 startet an der Startposition 13 und die Anzahl des Hauptwinkels 0° wird um 1 erhöht. Nach einer Rechtskurve von der ersten Fahrgasse 11 auf den Weg zu der zweiten Fahrgasse 12 befindet sich das Kraftfahrzeug 1 an der zweiten Position 17 und die Anzahl des Hauptwinkels 270°wird um 1 erhöht. Anschließend befindet sich das Kraftfahrzeug 1 in der zweiten Fahrgasse 12 und die Anzahl des Hauptwinkels 180°wird um 1 erhöht. Dann parkt das Kraftfahrzeug 1 rückwärts in den freien Parkplatz 10 ein und die Anzahl des Hauptwinkels 90° wird um 1 erhöht. N ach dem Ausparken befindet sich das Kraftfahrzeug 1 vorübergehend an einer fünften Position 21, und die Anzahl des Hauptwinkels 180° wird um 1 erhöht. Nach der fünfte n Position 21 fährt das Kraftfahrzeug 1 entlang des vorgegebenen Fahrstreckenmusters 19 zu der vierten Position 20, und die Anzahl des Hauptwinkels 90° wird um 1 erhöht, bis d as Kraftfahrzeug 1 schließlich wieder an der Startposition 13 ankommt und die Anzahl des Hauptwinkels 0°ein weiteres Mal um 1 erhöht wird. Durch einen Vergleich der nun jeweils aktuell vorgenommenen Anzahl der Winkeländerungen mit der jeweiligen Anzahl von Referenzwinkeländerungen aus einer abgespeicherten Winkeländerungstabelle wird die Startposition 13 erkannt, wenn die Anzahl der Winkeländerungen und die Anzahl der Referenzwinkeländerungen übereinstimmen. Analog zu Fig. 1 wird die Startposition 13 auch bei dem Ausführungsbeispiel von Fig. 2 wiedergefunden.

Die Winkeländerungstabelle für das Ausführungsbeispiel gemäß Fig. 2 ist wie in Tabelle 2 gezeigt abgespeichert.

**Tabelle 2:**

| Hauptwinkel | Anzahl von Referenzwinkeländerungen |
|---|---|
| 0° | 2 |
| 90° | 2 |
| 180° | 2 |
| 270° | 1 |

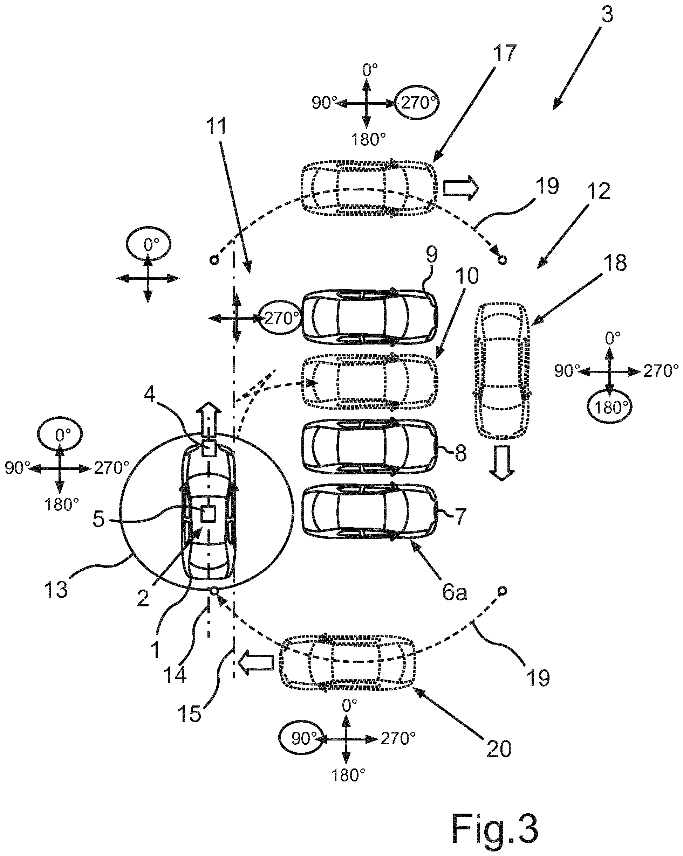

Fig. 3 zeigt ein weiteres Ausführungsbeispiel analog zu Fig. 1, wobei das Kraftfahrzeug 1 vorwärts in den freien Parkplatz 10 einparkt. Nach dem vorwärts Einparken in den freien Parkplatz 10 fährt das Kraftfahrzeug 1 dann wieder rückwärts heraus und ist ein weiteres Mal im Hauptwinkel von 0° ausgerichtet. Im Unterschied zu Fig. 1 kommt das Kraftfahrzeug 1 dann also beispielsweise nicht unmittelbar nach dem Ausparken an der ersten Position 16 zum Stehen, sondern gemäß der Darstellung von Fig. 3 wieder an der Startposition 13. Danach fährt das Kraftfahrzeug 1 analog zu Fig. 1 die zweite Position 17, die dritte Position 18 und die vierte Position 20 entlang des vorgegebenen Fahrstreckenmusters 19 ab. Bis das Kraftfahrzeug 1 schließlich wieder die Startposition 13 erreicht und diese dann durch das Erreichen der Übereinstimmung der Anzahlen von Winkeländerungen zu Referenzwinkeländerungen erkannt wird.

Die abgespeicherte Winkeländerungstabelle gemäß Fig. 3 liegt wie in Tabelle 3 gezeigt vor.

**Tabelle 3:**

| Hauptwinkel | Anzahl von Referenzwinkeländerungen |
|---|---|
| 0° | 3 |
| 90° | 1 |
| 270° | 2 |
| 180° | 1 |

Durch das Verfahren wird die Startposition 13 also wiedergefunden, indem das Kraftfahrzeug 1 die vorgegebene Fahrstrecke 19 abfährt und die Lage beziehungsweise Position des freien Parkplatzes 10 sowie Vorwärtseinparken oder Rückwärtseinparken des Kraftfahrzeugs 1 bei der Auswahl der Winkeländerungstabelle aus einer Mehrzahl von Winkeländerungstabellen berücksichtigt wird. Durch die ausgewählte Winkeländerungstabelle werden dann die Anzahlen der Referenzwinkeländerungen bereitgestellt, welche dann nach jeweils erfolgter aktueller Winkeländerung mit den aktuell vorgenommenen Anzahlen der Winkeländerungen verglichen werden können, um das Erreichen der Übereinstimmung der Anzahlen zu überprüfen.

Ergänzend oder alternativ kann es vorgesehen sein, dass nach der zweiten Parkplatzreihe 6b noch eine dritte Parkplatzreihe folgt, welche mit einer dritten Fahrgasse angefahren wird. Die dritte Fahrgasse wird dann mit dem Kraftfahrzeug 1 in Richtung der ersten Fahrgasse 11 durchfahren und somit entgegengesetzt der Richtung, in welcher die zweite Fahrgasse 12 durchfahren wird. Dadurch verläuft die vorgegebene Fahrstrecke 19 mit mehr als zwei Fahrgassen 11, 12 mäanderförmig. Ist der freie Parkplatz 10 dann beispielsweise in der dritten Parkplatzreihe, so wird das Kraftfahrzeug 1 nach dem Ausparken über eine vierte Fahrgasse entlang des vorgegebenen Fahrstreckenmusters 19 bewegt. Die vierte Fahrgasse ist dann bezüglich der dritten Fahrgasse auf der anderen Seite der dritten Parkplatzreihe angeordnet.

## Patentansprüche

1. Verfahren zum autonomen Wiederfinden einer Startposition (13) eines Kraftfahrzeugs (1) auf einer Parkfläche (3) durch das Kraftfahrzeug (1) mit folgenden Schritten:
a) Aktivieren eines Parkmodus des Kraftfahrzeugs (1) an der Startposition (13) zum Auffinden eines freien Parkplatzes (10);
b) Fahren des Kraftfahrzeugs (1) von der Startposition (13) zu dem freien Parkplatz (10) der Parkfläche (3);
c) Einparken des Kraftfahrzeugs (1) in den Parkplatz (10);
d) Ausparken aus dem Parkplatz (10) und Fahren des Kraftfahrzeugs (1) entlang eines vorgegebenen Fahrstreckenmusters (19) auf der Parkfläche (3); **gekennzeichnet durch** die folgenden Schritte:
e) Bestimmen einer entsprechenden Anzahl von während der Schritte b) bis d) vorgenommenen Winkeländerungen des Kraftfahrzeugs (1) bezüglich vorbestimmten und die Startposition (13) charakterisierenden Hauptwinkeln;
f) Vergleichen der jeweils aktuell vorgenommenen Anzahl der Winkeländerungen mit einer Anzahl von Referenzwinkeländerungen bezüglich den Hauptwinkeln in zumindest einer abgespeicherten Winkeländerungstabelle; und
g) Fahren entlang der vorgegebenen Fahrstrecke (19) bis zum Übereinstimmen der Anzahl der Winkeländerungen mit der Anzahl der Referenzwinkeländerungen in der Winkeländerungstabelle und Erkennen der Startposition (13) bei Erreichen der Übereinstimmung der Anzahlen.

2. Verfahren nach Anspruch 1,
**dadurch gekennzeichnet, dass**
der jeweilige Hauptwinkel als ein Winkel von 0° und /oder 90° und/oder 180° und/oder 270° relativ, insbesondere gegen den Uhrze igersinn, zur Ausrichtung einer Längsachse (15) einer Fahrgasse (11, 12) der Parkfläche (3) definiert wird.

3. Verfahren nach Anspruch 1 oder 2,
**dadurch gekennzeichnet, dass**
das Kraftfahrzeug (1) mit seiner Längsachse (14) nach Aktivieren des Parkmodus an der Startposition (13) parallel bezüglich einer Längsachse (15) einer Fahrgasse (11, 12) der Parkfläche (3) ausgerichtet wird.

4. Verfahren nach Anspruch 3,
**dadurch gekennzeichnet, dass**
das Kraftfahrzeug (1) mit seiner Längsachse (14) parallel zu einer Längsachse (15) einer nach der Startposition (13) zuerst angefahrenen Fahrgasse (11) der Parkfläche (3) ausgerichtet wird.

5. Verfahren nach einem der vorhergehenden Ansprüche,
**dadurch gekennzeichnet, dass**
die Winkeländerungstabelle abhängig von einer Position des freien Parkplatzes (10) auf der Parkfläche (3) aus einer Mehrzahl von abgespeicherten Winkeländerungstabellen ausgewählt wird.

6. Verfahren nach Anspruch 5,
**dadurch gekennzeichnet, dass**
die Winkeländerungstabelle abhängig von einer relativen Position des Parkplatzes (10) zu dem Kraftfahrzeug (1), insbesondere rechts oder links bezüglich einer Längsachse (14) des Kraftfahrzeugs (1) und in Vorwärtsfahrtrichtung des Kraftfahrzeugs (1) betrachtet, ausgewählt wird.

7. Verfahren nach einem der vorhergehenden Ansprüche,
**dadurch gekennzeichnet, dass**
die Winkeländerungstabelle abhängig von einer Einparkrichtung des Kraftfahrzeugs (1) in den Parkplatz (10), insbesondere vorwärts oder rückwärts, aus einer Mehrzahl von abgespeicherten Winkeländerungstabellen ausgewählt wird.

8. Verfahren nach den Ansprüchen 6 und 7,
**dadurch gekennzeichnet, dass**
die Winkeländerungstabelle für eine Einparkrichtung rückwärts in den freien Parkplatz (10) und dem rechts von dem Kraftfahrzeug (1) positionierten freien Parkplatz (10) durch dreimal den Hauptwinkel 0°, zweimal den Hauptwinkel 90°, einmal den Hauptwinkel 270° und einmal den Hauptwinkel 180° definiert wird.

9. Verfahren nach den Ansprüchen 6 und 7,
**dadurch gekennzeichnet, dass**
die Winkeländerungstabelle für eine Einparkrichtung rückwärts in den freien Parkplatz (10) und dem links von dem Kraftfahrzeug (1) positionierten freien Parkplatz (10) durch zweimal den Hauptwinkel 0°, zweimal den Hauptwinkel 90°, zweimal den Hauptwinkel 180° und einmal den Hauptwinkel 270° definiert wird.

10. Verfahren nach einem der vorhergehenden Ansprüche,
**dadurch gekennzeichnet, dass**
dem Kraftfahrzeug (1) zumindest ab der Startposition (13) eine aktuelle Infrastrukturinformation über die Parkfläche (3) bereitgestellt wird.

11. Verfahren nach Anspruch 10,
**dadurch gekennzeichnet, dass**
durch die aktuelle Infrastrukturinformation ein Lageplan und/oder eine jeweilige Position von aktuell freien Parkplätzen (10) der Parkfläche (3) dem Kraftfahrzeug (1) bereitgestellt wird.

12. Verfahren nach einem der vorhergehenden Ansprüche,
**dadurch gekennzeichnet, dass**
benachbarte Fahrgassen (11, 12) der Parkfläche (3), die zwischen Parkplatzreihen (6a, 6b) der Parkfläche (3) verlaufen, ab dem Bewegen des Kraftfahrzeugs (1) von der Startposition (13) ausgehend jeweils in abwechselnder Fahrtrichtung mit dem Kraftfahrzeug (1) durchfahren werden.

13. Fahrerassistenzsystem (2) für ein Kraftfahrzeug (1), welches dazu ausgebildet ist ein Verfahren nach einem der vorhergehenden Ansprüche auszuführen.

14. Fahrerassistenzsystem (2) nach Anspruch 13,
**dadurch gekennzeichnet, dass**
das Kraftfahrzeug (1) einen Laserscanner (4) und/oder eine Winkelbestimmungseinheit (5) umfasst.

15. Kraftfahrzeug (1) mit einem Fahrerassistenzsystem (2) nach Anspruch 13 oder 14.

## Claims

1. Method for autonomous recovery of a starting position (13) of a motor vehicle (1) on a parking area (3) by the motor vehicle (1), comprising the following steps:
a) activating a parking mode of the motor vehicle (1) at the starting position (13) for determining the location of a free parking space (10);
b) driving the motor vehicle (1) from the starting position (13) to the free parking space (10) of the parking area (3);
c) parking the motor vehicle (1) in the parking space (10);
d) removing the motor vehicle (1) from the parking space (10) and driving it along a predefined route pattern (19) of the parking area (3),
**characterized by** the following steps:
e) determining a corresponding number of angle changes of the motor vehicle (1), performed during the steps b) to d), with respect to predetermined main angles which characterize the starting position (13);
f) comparing the respective currently performed number of angle changes with a number of reference angle changes with respect to the main angles in at least one stored angle change table; and
g) driving along the predefined route (19) until the number of angle changes corresponds to the number of reference angle changes in the angle change table, and detecting the starting position (13) when correspondence between the numbers is achieved.

2. Method according to Claim 1,
**characterized in that**
the respective main angle is defined as an angle of 0° and/or 90° and/or 180° and/or 270° relative to the orientation of a longitudinal axis (15) of a driving lane (11, 12) of the parking area (3), in particular in an anticlockwise direction.

3. Method according to Claim 1 or 2,
**characterized in that**
after the activation of the parking mode at the starting position (13), the motor vehicle (1) is oriented with its longitudinal axis (14) parallel to a longitudinal axis (15) of a driving lane (11, 12) of the parking area (3).

4. Method according to Claim 3,
**characterized in that**
the motor vehicle (1) is oriented with its longitudinal axis (14) parallel to a longitudinal axis (15) of a driving lane (11) of the parking area (3) which is first driven on after the starting position (13).

5. Method according to one of the preceding claims,
**characterized in that**
the angle change table is selected as a function of a positon of the free parking space (10) of the parking area (3) from a multiplicity of stored angle change tables.

6. Method according to Claim 5,
**characterized in that**
the angle change table is selected as a function of a relative positon of the parking space (10) with respect to the motor vehicle (1), in particular to the right or left in relation to a longitudinal axis (14) of the motor vehicle (1) and considered in the direction of forward travel of the motor vehicle (1).

7. Method according to one of the preceding claims,
**characterized in that**
the angle change table is selected as a function of a parking direction of the motor vehicle (1) into the parking space (10), in particular forwards or rearwards, from a multiplicity of store angle change tables.

8. Method according to Claims 6 and 7,
**characterized in that**
the angle change table is defined for a parking direction rearwards into the free parking space (10) and the free parking space (10) positioned to the right of the motor vehicle (1) by three times the main angle 0°, twice the main angle 90°, once the main angle 270° and once the main angle 180°.

9. Method according to Claims 6 and 7,
**characterized in that**
the angle change table for a parking direction rearwards into the free parking space (10) and the free parking space (10) positioned to the left of the motor vehicle (1) is defined by twice the main angle 0°, twice the main angle 90°, twice the main angle 180° and once the main angle 270°.

10. Method according to one of the preceding claims,
**characterized in that**
current infrastructure information about the parking area (3) is made available to the motor vehicle (1) at least starting from the starting position (13).

11. Method according to Claim 10,
**characterized in that**
a position plan and/or a respective position of currently free parking spaces (10) of the parking area (3) is made available to the motor vehicle (1) by means of the current infrastructure information.

12. Method according to one of the preceding claims,
**characterized in that**
adjacent driving lanes (11, 12) of the parking area (3) which run between rows (6a, 6b) of parking spaces of the parking area (3) are travelled through in each case in an alternating direction of travel with the motor vehicle (1) starting from the movement of the motor vehicle (1) from the starting position (13).

13. Driver assistance system (2) for a motor vehicle (1) which is designed to carry out a method according to one of the preceding claims.

14. Driver assistance system (2) according to Claim 13,
**characterized in that**
the motor vehicle (1) comprises a laser scanner (4) and/or an angle-determining unit (5).

15. Motor vehicle (1) having a driver assistance system (2) according to Claim 13 or 14.

## Revendications

1. Procédé pour faire retrouver par un véhicule (1) la position de départ (13) du véhicule (1) sur une surface de stationnement (3), le procédé comportant les étapes suivantes :
a) dans la position de départ (13), activation d'un mode de stationnement du véhicule automobile (1) en vue de trouver un emplacement de stationnement libre (10),
b) déplacement du véhicule automobile (1) depuis la position de départ (13) jusqu'à l'emplacement de stationnement libre (10) de la surface de stationnement (3),
c) stationnement du véhicule (1) à l'emplacement de stationnement (10),
d) sortie hors de l'emplacement de stationnement (10) et déplacement du véhicule (1) sur la surface de stationnement (3) suivant un motif prédéterminé de déplacement (19),
**caractérisé par** les étapes suivantes :
e) détermination d'un nombre approprié de modifications de direction réalisées pendant les étapes b) à d) du véhicule automobile (1) par rapport à des angles principaux prédéterminés et caractérisant la position de départ (13),
f) comparaison du nombre effectivement réalisé de modifications de direction à un nombre de modifications de direction de référence par rapport aux angles principaux en au moins un tableau conservé en mémoire de modifications de direction et
g) déplacement le long du parcours prédéterminé (19) jusqu'à correspondance entre le nombre de modifications de direction et le nombre de modifications de direction de référence dans le tableau de modifications de direction et détection de la position de départ (13) lorsque la correspondance entre les nombres est atteinte.

2. Procédé selon la revendication 1, **caractérisé en ce que** l'angle principal est un angle de 0°, 90°, 180° et/ou 270°, en particulier dans le sens contraire des aiguilles d'une montre, pour l'alignement de l'axe longitudinal (15) par rapport à une voie de déplacement (11, 12) de la surface de stationnement (3).

3. Procédé selon les revendications 1 ou 2, **caractérisé en ce qu'**après l'activation du mode de stationnement l'axe longitudinal (14) du véhicule automobile (1) est aligné parallèlement à l'axe longitudinal (15) d'une voie de déplacement (11, 12) de la surface de stationnement (3).

4. Procédé selon la revendication 3, **caractérisé en ce que** l'axe longitudinal (14) du véhicule automobile (1) est aligné parallèlement à l'axe longitudinal (15) de la voie de déplacement (11) utilisée en premier lieu après la position de stationnement (13) de la surface de stationnement (3).

5. Procédé selon l'une des revendications précédentes, **caractérisé en ce que** le tableau des modifications de direction est sélectionné en fonction de la position de l'emplacement de stationnement libre (10) sur la surface de stationnement (3) parmi plusieurs tableaux de modifications de direction conservés en mémoire.

6. Procédé selon la revendication 5, **caractérisé en ce que** le tableau de modifications de direction est sélectionné en fonction de la position relative de l'emplacement de stationnement libre (10) par rapport au véhicule automobile (1), en particulier à droite ou à gauche de l'axe longitudinal (14) du véhicule automobile (1) et dans la direction de déplacement avant du véhicule automobile (1).

7. Procédé selon l'une des revendications précédentes, **caractérisé en ce que** le tableau de modifications de direction est sélectionné en fonction d'une direction de stationnement du véhicule automobile (1) dans l'emplacement de stationnement (10), en particulier en avant ou en arrière, parmi plusieurs tableaux de modifications de direction conservés en mémoire.

8. Procédé selon les revendications 6 et 7, **caractérisé en ce que** pour une direction de stationnement vers l'arrière vers l'emplacement de stationnement libre (10) et de l'emplacement de stationnement libre (10) situé à droite du véhicule automobile (1), le tableau de modifications de direction est défini par trois fois l'angle principal 0°, deux fois l'angle principal 90°, une fois l'angle principal 270° et une fois l'angle principal 180°.

9. Procédé selon les revendications 6 et 7, **caractérisé en ce que** pour une direction de stationnement vers l'arrière vers l'emplacement de stationnement libre (10) et de l'emplacement de stationnement libre (10) situé à gauche du véhicule automobile (1), le tableau de modifications de direction est défini par deux fois l'angle principal 0°, deux fois l'angle principal 90°, deux fois l'angle principal 180° et une fois l'angle principal 270°.

10. Procédé selon l'une des revendications précédentes, **caractérisé en ce qu'**une information actualisée sur l'infrastructure de la surface de stationnement (3) est délivrée au véhicule automobile (1) au moins à partir de la position initiale (13).

11. Procédé selon la revendication 10, **caractérisé en ce que** l'information actualisée sur l'infrastructure fournit au véhicule automobile (1) un plan de situation et/ou la position des emplacements de stationnement libre (10) actuellement disponibles de la surface de stationnement (3).

12. Procédé selon l'une des revendications précédentes, **caractérisé en ce que** des parcours de déplacement (11, 12) voisins de la surface de stationnement (3) qui s'étendent entre des rangées (6a, 6b) d'emplacements de stationnement de la surface de stationnement (3) sont traversés par le véhicule automobile (1) dans des directions de déplacement alternées à partir du déplacement du véhicule automobile (1) depuis sa position de départ (13).

13. Système (2) d'assistance au conducteur d'un véhicule (1) configuré pour mettre en oeuvre un procédé selon l'une des revendications précédentes.

14. Système (2) d'assistance au conducteur selon la revendication 13, **caractérisé en ce que** le véhicule automobile (1) comporte un scanner laser (4) et/ou une unité (5) de détermination de directions.

15. Véhicule automobile (1) doté d'un système (2) d'assistance au conducteur selon les revendications 13 ou 14.
